# EUROPEAN PATENT APPLICATION

(11) **EP 3 422 154 A1**
(43) Date of publication of application: **02.01.2019**
(21) Application number: 18180219.0
(22) Date of filing: 27.06.2018
(51) Int. Cl.: G06F 3/01

(54) **SYSTEMS AND METHODS FOR DETERMINING A DEVICE'S ACCELERATION USING ITS INTERNAL MICROPHONE**

(30) Priority: 28.06.2017 US 201715636440
(71) Applicant: Immersion Corporation, San Jose, CA 95134 (US)
(72) Inventor: SABOUNE, Jamal, Montreal, Québec H2W 2R2 (CA); CRUZ-HERNANDEZ, Juan Manuel, Montreal, Québec H2W 2R2 (CA)
(74) Representative: McDougall, Robert Campbell

(57) **Abstract**

Examples of devices, systems, and methods for estimating a portable computing device's acceleration when vibrating by using its internal microphone are disclosed. In one example, a portable computing device (100) has a haptic output device (118) that outputs a haptic effect causing the portable computing device (100) to vibrate. An audio signal from a microphone (142) in the portable computing device (100) is captured while the portable computing device (100) vibrates because of the haptic effect being output. The audio signal can be used to estimate the acceleration of the portable computing device (100) caused by the output of the haptic effect.

## Description

### FIELD

The present application generally relates to determining acceleration of portable devices while vibrating.

### BACKGROUND

When an actuator in a portable device is actuated the portable device often vibrates causing the portable device to move. Traditionally, an external accelerometer has been attached to the portable device to measure the acceleration signals generated when the portable device vibrates. This, of course, requires using an external accelerometer which can be inefficient and impractical in particular scenarios. For example, it is inefficient and impractical to have an external accelerometer constantly attached to a portable device. An internal accelerometer in a portable device has also been used to measure the acceleration signals generated when the portable device vibrates. This, however, requires multiple iterations to estimate the portable device's acceleration when vibrating. In addition, an internal accelerometer in a portable device generally has a sampling rate that is too low to efficiently and effectively estimate the portable device's acceleration when vibrating. Moreover, not all portable devices have an internal accelerometer. A portable computing device that can estimate its own acceleration when vibrating by using its own internal microphone having a high sampling rate is needed.

### SUMMARY

Various examples are described for devices, systems, and methods for capturing a device's acceleration when vibrating using an internal microphone.

One example disclosed portable computing device includes a haptic output device, a microphone, a memory, and a processor in communication with the haptic output device and the microphone. In this example, the processor is configured to receive executable instructions from the memory which, when executed by the processor, cause the processor to: generate a haptic signal configured to cause the haptic output device to output a haptic effect; output the haptic signal to the haptic output device to cause the haptic output device to output the haptic effect; capture an audio signal using the microphone while at least part of the haptic effect is output by the haptic output device; and estimate an acceleration of the portable computing device when the haptic effect is output based on the audio signal.

The portable computing device may be modified in any suitable way as disclosed herein including, but not limited to, any one or more of the following. In some examples, the audio signal comprises a raw PCM signal. The audio signal may have a sampling rate of at least 8,000 Hz (8 kHz). The audio signal may have a sampling rate of at least 22,050 Hz and/or at least 22 kHz. In some examples, the audio signal has a sampling rate of at least 44,100 Hz (44.1 kHz). In examples, the audio signal can be captured without using any external sensor, such as an external microphone or an external accelerometer. In such examples, the acceleration of the portable computing device when the haptic effect is output can be estimated based on the audio signal without using any external sensor.

In some examples, the portable computing device does not have an accelerometer. In other examples, the portable computing device has an accelerometer. In examples, the audio signal has a sampling rate that is greater than a maximum sampling rate corresponding to the accelerometer. For example, the audio signal may have a sampling rate of 44,100 Hz (44.1 kHz) and an accelerometer driver in the portable computing device may specify a maximum sampling rate of 200 Hz for the accelerometer.

In examples, a maximum sampling rate corresponding to the microphone can be greater than a maximum sampling rate corresponding to the accelerometer. For example, a driver in the portable computing device can be configured to control the accelerometer and specifies a maximum sampling rate for the accelerometer. In this example, a driver in the portable computing device can be configured to control the microphone and specifies a maximum sampling rate for the microphone.

In one example, an accelerometer driver in the portable computing device specifies a maximum sampling rate that is 100 Hz (0.1 kHz) or less for the accelerometer. In another example, an accelerometer driver in the portable computing device specifies a maximum sampling rate that is less than 1,000 Hz (1 kHz) for the accelerometer. In some examples, a microphone driver in the portable computing device specifies a maximum sampling rate that is at least 20,050 Hz (20.05 kHz) for the microphone. In other examples, a microphone driver in the portable computing device specifies a maximum sampling rate that is at least 44,100 Hz (44.1 kHz) for the microphone.

The haptic output device is a linear resonant actuator (LRA) in an example. In some examples, the haptic output device is an eccentric rotating mass (ERM) motor. In some examples, the haptic output device is a single actuator. In other examples, the haptic output device can be two or more actuators. In some examples, the portable computing device is at least one of a smartphone, a phablet, or a tablet.

In some examples, the processor in the portable computing device is further configured to receive executable instructions from the memory which, when executed by the processor, cause the processor to: apply at least one filter to the audio signal to remove frequencies from the audio signal not corresponding to a vibration frequency of the haptic output device prior to estimating the acceleration. In some examples, the processor in the portable computing device is further configured to receive executable instructions from the memory which, when executed by the processor, cause the processor to: apply at least one of a low pass filter or a band pass filter to the audio signal prior to estimating the acceleration.

In various examples, the processor in the portable computing device is further configured to receive executable instructions from the memory which, when executed by the processor, cause the processor to: adjust at least one characteristic of the haptic effect in real-time until the estimated acceleration corresponds with a predefined acceleration for the haptic effect. In an example, the portable computing device has a display in communication with the processor. The display can be a liquid crystal display (LCD) such as a super twisted nematic (STN) display, color super twisted nematic (CSTN) display, thin film transistor (TFT) display, thin film diode (TFD) display. The display may be an organic light-emitting diode (OLED) display or an active-matrix organic light-emitting diode (AMOLED) display. The display may be a capacitive touchscreen display or a resistive touchscreen display. In examples, the processor is further configured to receive executable instructions from the memory which, when executed by the processor, cause the processor to: output a display signal to the display. The display signal may be configured to cause the display to show the estimated acceleration on the display.

One example disclosed method includes: capturing, by a processor in a portable computing device, an audio signal from a microphone in the portable computing device; and estimating, by the processor, an acceleration of the portable computing device based on the audio signal. In some examples, the method further comprises: receiving, by the processor, a sensor signal from a sensor in the portable computing device, the sensor signal indicating a movement of the portable computing device; and capturing the audio signal in response to receiving the sensor signal indicating the movement of the portable computing device. In some example, the method further comprises: applying, by the processor, at least one filter to the audio signal prior to estimating the acceleration.

The method may be modified in any suitable way as disclosed herein including, but not limited to, any one or more of the following. In some examples, the method further comprises: generating, by the processor, a haptic signal configured to cause a haptic output device in the portable computing device to output a haptic effect; outputting, by the processor, the haptic signal to the haptic output device to cause the haptic output device to output the haptic effect, and wherein the output of the haptic effect causes the sensor in the portable computing device to send the sensor signal indicating the movement of the portable computing device to the processor in the portable computing device.

In some examples, the method further comprises: adjusting, by the processor, at least one characteristic of the haptic effect in real-time until the estimated acceleration corresponds with a predefined acceleration for the haptic effect. In some examples, the method further comprises: outputting, by the processor, a display signal to a display in the portable computing device, the display signal configured to cause the display to show the estimated acceleration on the display. The audio signal may be a raw pulse-code modulation (PCM) signal. The audio signal can comprise a sampling rate greater than a maximum sampling rate corresponding to an accelerometer in the portable computing device. The maximum sampling rate can correspond to the accelerometer. The maximum sampling rate may be specified by an accelerometer driver configured to control the accelerometer. The accelerometer can be the sensor. The microphone can be the sensor.

One example disclosed method includes: generating, by a processor in a portable computing device, a haptic signal configured to cause a haptic output device in the portable computing device to output a haptic effect; outputting, by the processor, the haptic signal to the haptic output device to cause the haptic output device to output the haptic effect; capturing, by the processor, an audio signal from a microphone in the portable computing device while at least part of the haptic effect is output by the haptic output device; and estimating, by the processor, an acceleration of the portable computing device when the haptic effect is output based on the audio signal.

The method may be modified in any suitable way as disclosed herein including, but not limited to, any one or more of the following. In some examples, the method further comprises: applying, by the processor, at least one filter to the audio signal prior to estimating the acceleration. The method can further comprise: adjusting, by the processor, at least one characteristic of the haptic effect in real-time until the estimated acceleration corresponds with a predefined acceleration for the haptic effect. In some examples, such as where characteristic(s) of the haptic effect are not adjusted in real-time, the method further comprises: outputting, by the processor, a display signal to a display in the portable computing device. The display signal can be configured to cause the display to do show the estimated acceleration on the display.

In examples, the audio signal is a raw pulse-code modulation (PCM) signal. The audio signal can have a sampling rate that is greater than a maximum sampling rate corresponding to an accelerometer in the portable computing device.

One example disclosed non-transitory computer-readable medium includes one or more software applications configured to be executed by a processor. In this example, the one or more software applications is configured to: generate a haptic signal configured to cause a haptic output device in a portable computing device to output a haptic effect; output the haptic signal to the haptic output device to cause the haptic output device to output the haptic effect; capture an audio signal from a microphone in the portable computing device while at least part of the haptic effect is output by the haptic output device; and estimate an acceleration of the portable computing device when vibrating based on the audio signal.

The non-transitory computer readable medium may be modified in any suitable way as disclosed herein including, but not limited to, any one or more of the following. In some examples, the one or more software applications is further configured to: apply at least one filter to the audio signal prior to estimating the acceleration. In various examples, the one or more software applications is further configured to: adjust at least one characteristic of the haptic effect in real-time until the estimated acceleration corresponds with a predefined acceleration for the haptic effect. In some examples, the one or more software applications is further configured to: output a display signal to a display a display in the portable computing device. The display signal may be configured to cause the display to show the estimated acceleration.

These illustrative examples are mentioned not to limit or define the scope of this disclosure, but rather to provide examples to aid understanding thereof. Illustrative examples are discussed in the Detailed Description, which provides further description. Advantages offered by various examples may be further understood by examining this specification.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The accompanying drawings, which are incorporated into and constitute a part of this specification, illustrate one or more certain examples and, together with the description of the example, serve to explain the principles and implementations of the certain examples.

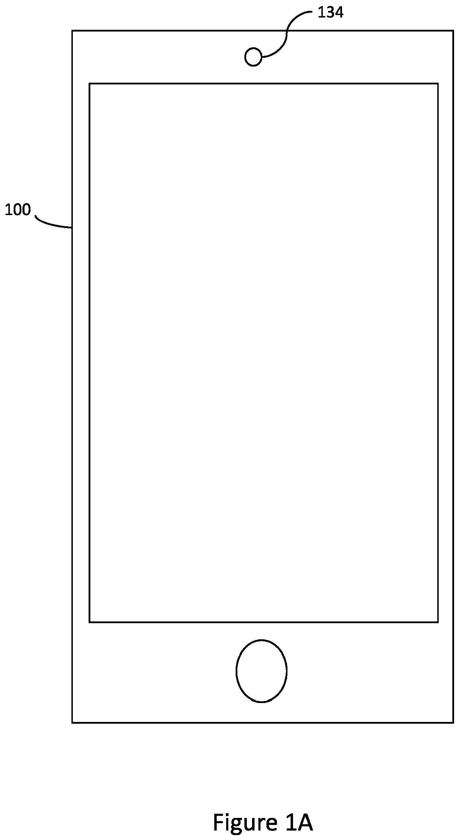

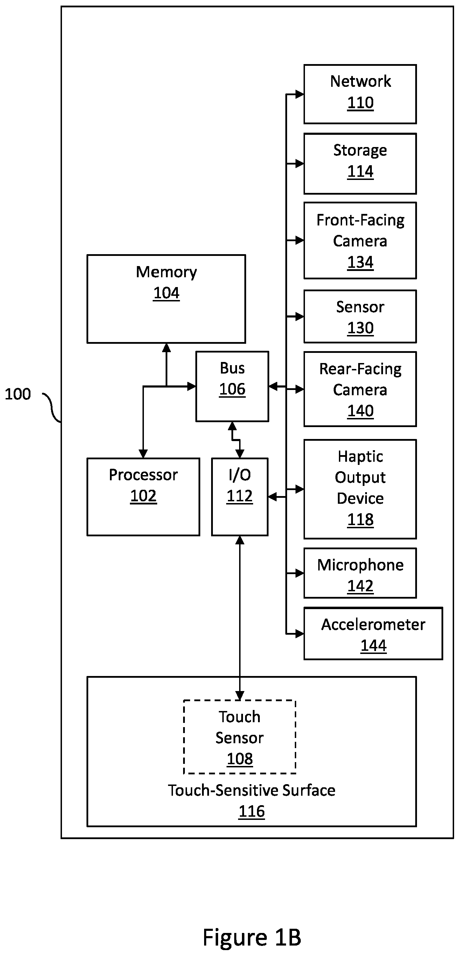

Figures 1A and 1B show an example computing device for estimating an acceleration of the computing device when the computing device's internal haptic output device outputs a haptic effect by using the computing device's internal microphone in estimating the acceleration according to an example.

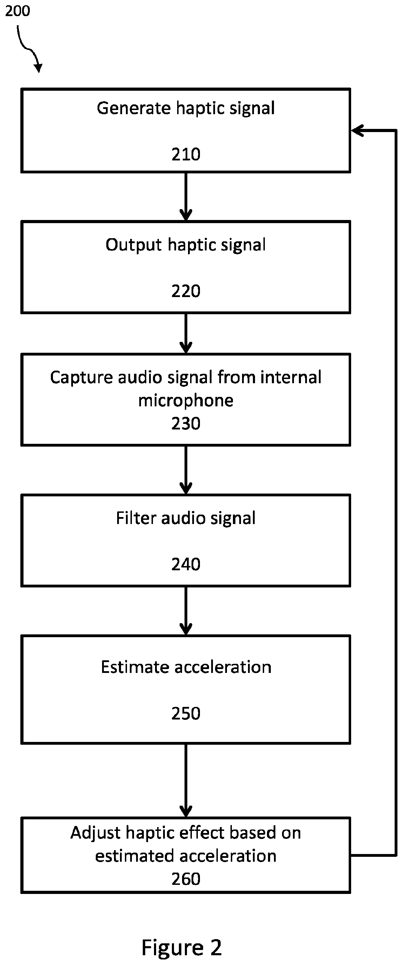

Figure 2 shows an example method of estimating an acceleration of a computing device when the computing device's internal haptic output device outputs a haptic effect by using the computing device's internal microphone according to an example.

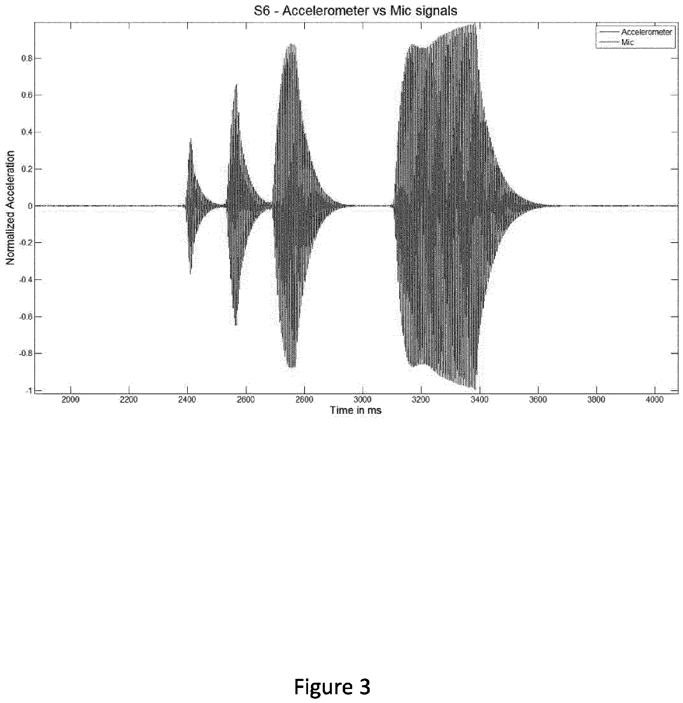

Figure 3 shows a normalized acceleration measured by an external accelerometer when a Samsung Galaxy S6 smartphone having a linear resonant actuator (LRA) outputs a particular haptic effect compared to an estimated normalized acceleration measured using the Samsung Galaxy S6 smartphone's internal microphone according to method 200 shown in Figure 2 according to an example.

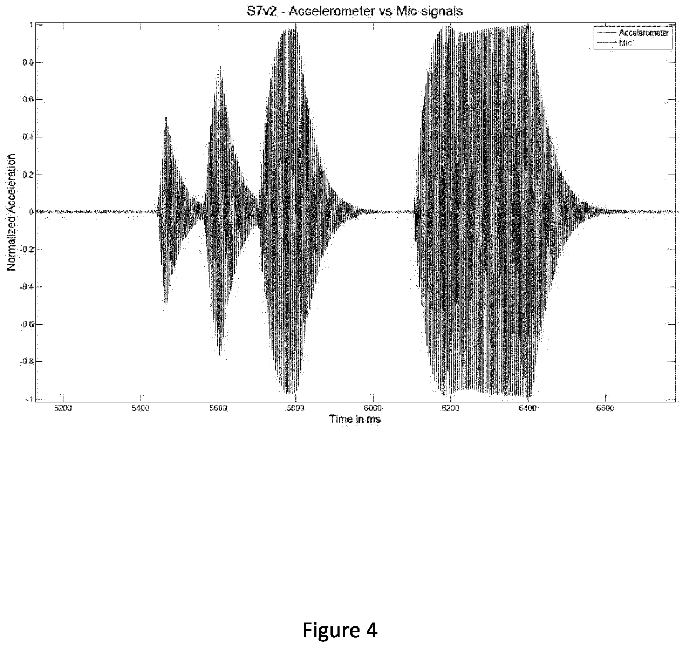

Figure 4 shows a normalized acceleration measured by an external accelerometer when a Samsung Galaxy S7 smartphone having a linear resonant actuator (LRA) outputs a particular haptic effect compared to an estimated normalized acceleration measured using the Samsung Galaxy S7 smartphone's internal microphone according to method 200 shown in Figure 2 according to an example.

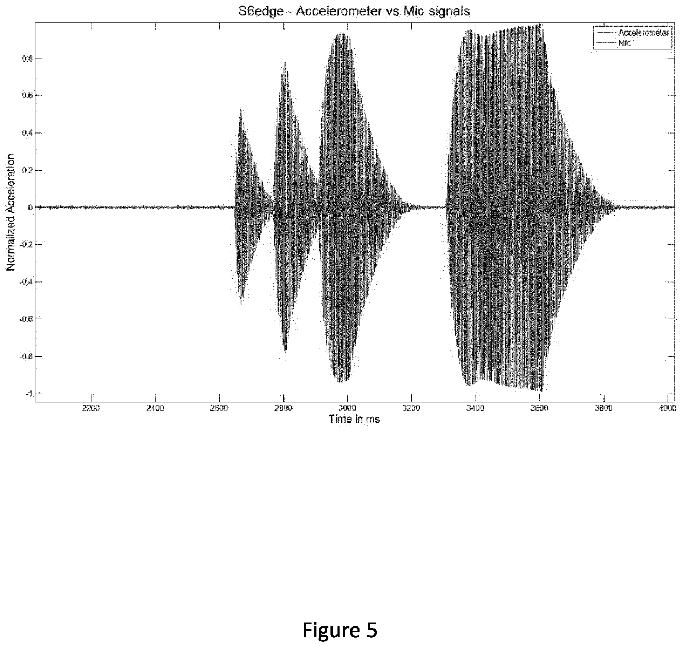

Figure 5 shows a normalized acceleration measured by an external accelerometer when a Samsung Galaxy S6 Edge smartphone having a linear resonant actuator (LRA) outputs a particular haptic effect compared to an estimated normalized acceleration measured using the Samsung Galaxy S6 Edge smartphone's internal microphone according to method 200 shown in Figure 2 according to an example.

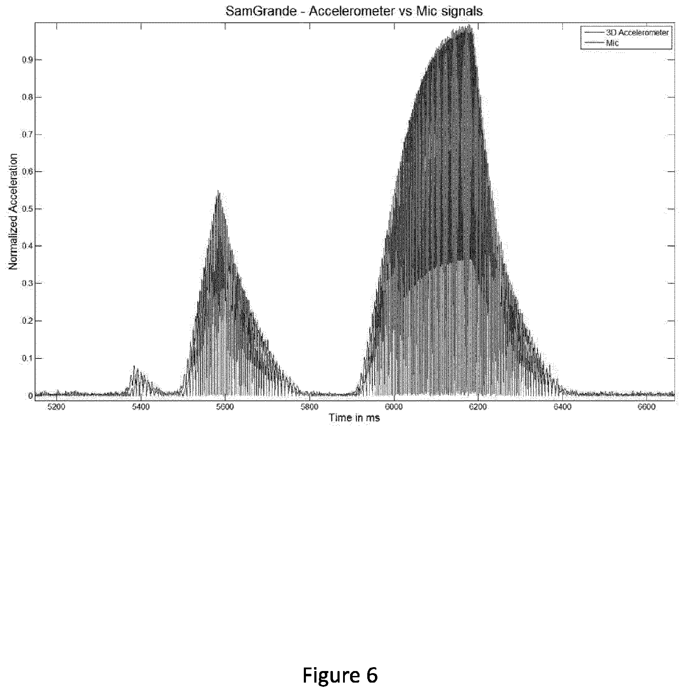

Figure 6 shows a normalized acceleration measured by an external accelerometer when a Samsung Grande smartphone having a coin eccentric rotating mass (ERM) motor outputs a particular haptic effect compared to an estimated normalized acceleration measured using the Samsung Grande smartphone's internal microphone according to method 200 shown in Figure 2 according to an example.

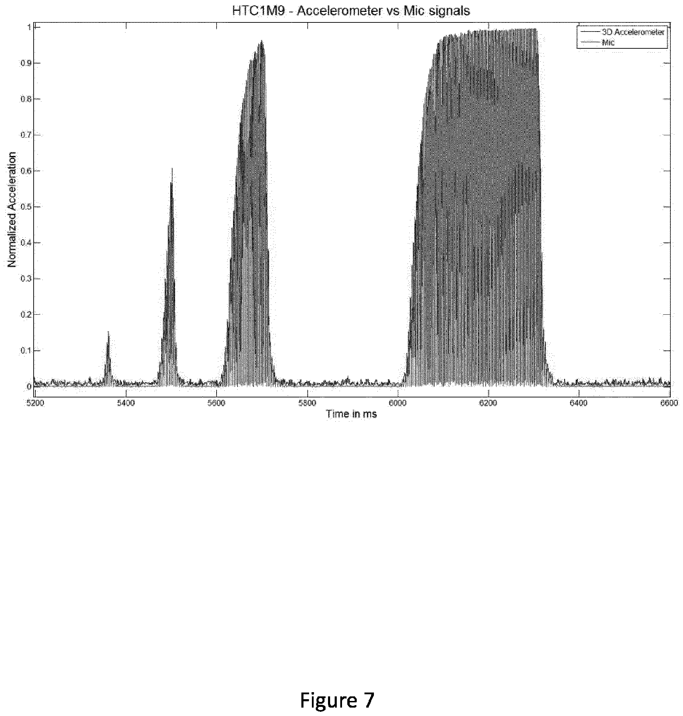

Figure 7 shows a normalized acceleration measured by an external accelerometer when a HTC One M9 smartphone having a bar eccentric rotating mass (ERM) motor outputs a particular haptic effect compared to an estimated normalized acceleration measured using the HTC One M9 smartphone's internal microphone according to method 200 shown in Figure 2 according to an example.

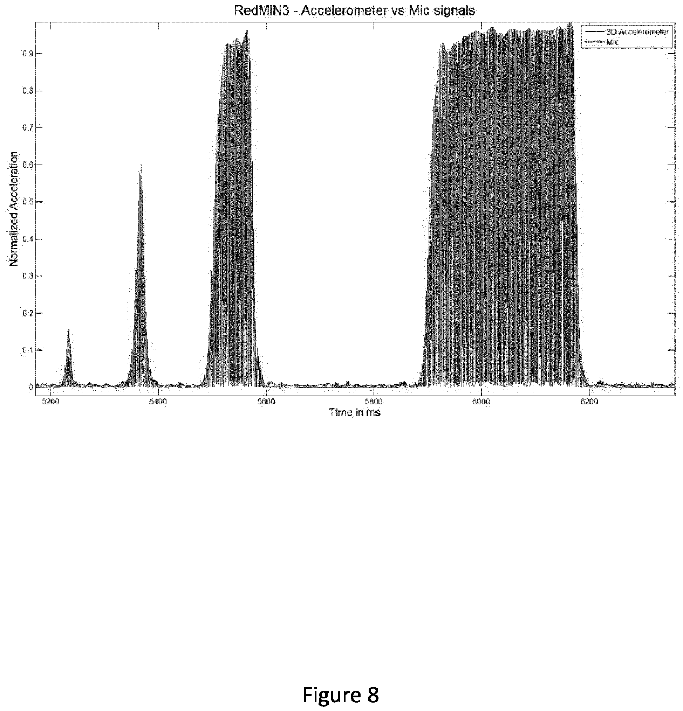

Figure 8 shows a normalized acceleration measured by an external accelerometer when a Xiaomi RedMi Note 3 smartphone having a bar eccentric rotating mass (ERM) motor outputs a particular haptic effect compared to an estimated normalized acceleration measured using the Xiaomi RedMi Note 3 smartphone's internal microphone according to method 200 shown in Figure 2 according to an example.

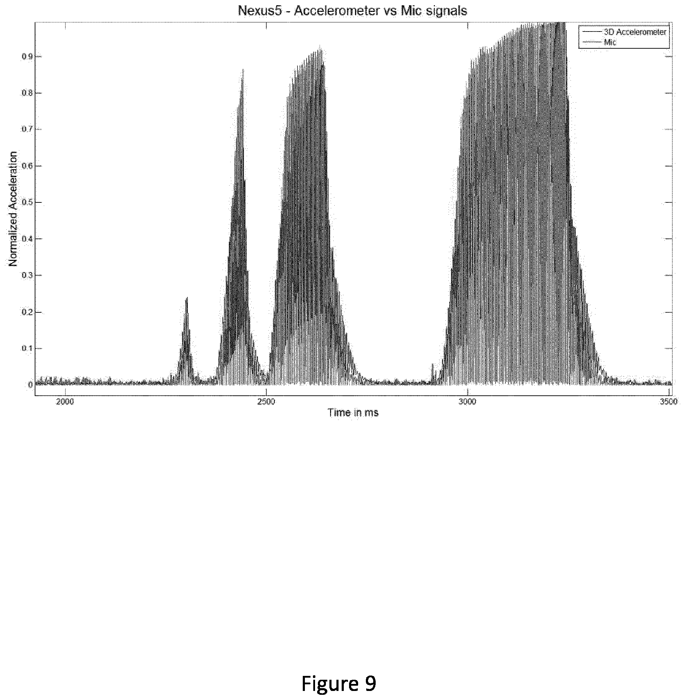

Figure 9 shows a normalized acceleration measured by an external accelerometer when a LG Nexus 5 smartphone having a coin eccentric rotating mass (ERM) motor outputs a particular haptic effect compared to an estimated normalized acceleration measured using the LG Nexus 5 smartphone's internal microphone according to method 200 shown in Figure 2 according to an example.

### DETAILED DESCRIPTION

Examples are described herein in the context of devices, systems, and methods to capture a device's acceleration when vibrating by using the device's internal microphone. Those of ordinary skill in the art will realize that the following description is illustrative only and is not intended to be in any way limiting. Reference will now be made in detail to implementations of examples as illustrated in the accompanying drawings. The same reference indicators will be used throughout the drawings and the following description to refer to the same or like items.

In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

### Illustrative Example of Capturing a Device's Acceleration When Vibrating by Using the Device's Internal Microphone

In one illustrative example, a portable computing device (such as a smartphone, phablet, tablet, etc.) has an internal haptic output device (such as a linear resonant actuator and/or an eccentric rotating mass motor) and an internal microphone. In this illustrative example, the portable computing device vibrates when the internal haptic output device outputs a haptic effect causing the portable computing device to accelerate while the haptic effect is being output. The internal microphone in the portable computing device is used to capture an audio signal (such as a raw pulse-code modulation (PCM) audio signal) while the internal haptic output device in the portable computing device outputs the haptic effect.

The captured audio signal can then be filtered and used to estimate an acceleration of the portable computing device while the haptic effect is being output by the internal haptic output device. In examples, the estimated acceleration estimates the acceleration of the entire portable computing device when the haptic effect is output. An estimated acceleration of the entire portable computing device can correlate with and indicate an estimated acceleration produced by the internal haptic output device when outputting the haptic effect. In some examples, the estimated acceleration can be used to estimate characteristics (such as rise time, stop/decay time, maximum magnitude, pulsing frequency, etc.) of the haptic effect, the portable computing device, and/or the internal haptic output device. The rise time may correspond to the time needed by an actuator to reach its steady state given that it is at rest. The decay time can correspond to the time needed by an actuator to reach a rest state given that it is in its steady state.

In other examples, the estimated acceleration is analyzed and continuously or periodically updated by the portable computing device in real-time to increase or decrease an intensity characteristic corresponding to the haptic effect in real-time until the estimated acceleration matches a predefined acceleration for the haptic effect. In this way, a designer can specify an intended acceleration for a haptic effect and one or more characteristics corresponding to the haptic effect can be adjusted by the portable computing device in real-time until the estimated acceleration matches the intended acceleration for the haptic effect. In examples, this allows a designer to specify an intended acceleration for a haptic effect and the haptic effect can be consistently output at the intended acceleration in various types of portable computing devices (e.g., smartphone, phablets, tablets, etc.) having various types of internal haptic output devices (e.g., linear resonant actuator, eccentric rotating mass motor, etc.).

This illustrative example is given to introduce the reader to the general subject matter discussed herein and the disclosure is not limited to this example. The following sections describe various additional non-limiting examples.

Referring now to Figures 1A and 1B, these figures show an example portable computing device 100 for estimating acceleration of portable computing device 100 when haptic output device 118 outputs a haptic effect by using an internal microphone 142 in estimating the acceleration. Figure 1A shows the front of the portable computing device 100 and Figure 1B shows components of the portable computing device 100.

The portable computing device 100 may comprise, for example, a smartphone, phablet, tablet, e-reader, digital camera, portable gaming device, portable medical device, or gaming controller. In some examples, the portable computing device 100 may include wearable computing devices, such as wristwatches, bracelets, necklaces, belts, virtual reality (VR) headsets, or headphones. While portable computing device 100 is shown as a single device in Figures 1A and 1B, in other examples, the portable computing device 100 may comprise multiple devices.

The example portable computing device 100 comprises a processor 102 interfaced with other hardware via bus 106. A memory 104, which can comprise any suitable tangible (and non-transitory) computer-readable medium such as RAM, ROM, EEPROM, or the like, may embody program components that configure operation of the portable computing device 100. In some examples, the portable computing device 100 may further comprise one or more network interface devices 110, input/output (I/O) interface components 112, and additional storage 114. In other examples, portable computing device 100 does not have network interface devices 110, interface components 112, and/or additional storage 114.

Network interface device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate a connection to devices such as one or more displays, keyboards, cameras, mice, speakers, buttons, joysticks, and/or other hardware used to input data or output data. Additional storage 114 represents nonvolatile storage such as read-only memory, flash memory, random access memory (RAM), ferroelectric RAM (F-RAM), magnetic, optical, or other storage media included in the portable computing device 100 or coupled to processor 102.

The portable computing device 100 includes a touch-sensitive surface 116. In the example shown in Figure 1B, the touch-sensitive surface 116 is integrated into portable computing device 100. In other examples, the portable computing device 100 may not comprise the touch-sensitive surface 116. Touch-sensitive surface 116 represents any surface that is configured to sense tactile input of a user. In some examples, the touch-sensitive surface 116 may be rollable, bendable, foldable, stretchable, twistable, squeezable, or otherwise deformable. For example, the touch-sensitive surface 116 may comprise a bendable electronic paper or a touch-sensitive display device.

One or more touch sensors 108 are configured to detect a touch in a touch area in some examples when an object contacts a touch-sensitive surface 116 and provide appropriate data for use by processor 102. Any suitable number, type, or arrangement of sensors can be used. For example, resistive and/or capacitive sensors may be embedded in touch-sensitive surface 116 and used to determine the location of a touch and other information, such as pressure, speed, and/or direction. As another example, optical sensors with a view of the touch-sensitive surface 116 may be used to determine the touch position.

In other examples, the touch sensor 108 may comprise a LED (Light Emitting Diode) detector. For example, in some examples, touch-sensitive surface 116 may comprise a LED finger detector mounted on the side of a display. In some examples, the processor 102 is in communication with a single touch sensor 108. In other examples, the processor 102 is in communication with a plurality of touch sensors 108, for example, touch sensors associated with a first touch-screen and a second touch screen. The touch sensor 108 is configured to detect user interaction, and based on the user interaction, transmit signals to processor 102. In some examples, touch sensor 108 may be configured to detect multiple aspects of the user interaction. For example, touch sensor 108 may detect the speed and pressure of a user interaction, and incorporate this information into the signal. In some examples, portable computing device 100 does not comprise a touch-sensitive surface and/or a touch sensor.

In some examples, portable computing device 100 may include a touch-enabled display that combines a touch-sensitive surface 116 and a display. The touch-sensitive surface 116 may correspond to the display exterior or one or more layers of material above components of the display. In other examples, touch-sensitive surface 116 may not comprise (or otherwise correspond to) a display, depending on the particular configuration of the portable computing device 100. In some examples, portable computing device 100 does not comprise a display.

The portable computing device 100 also comprises one or more additional sensor(s) 130. The sensor(s) 130 are configured to transmit sensor signals to the processor 102. In some examples, the sensor(s) 130 may comprise, for example, a camera, humidity sensor, ambient light sensor, gyroscope, GPS unit, range sensor or depth sensor, biorhythm sensor, or temperature sensor. Although the example shown in Figure 1B depicts the sensor 130 internal to portable computing device 100, in some examples, the sensor 130 may be external to portable computing device 100. For example, in some examples, the one or more sensors 130 may be associated with a game controller for use with a portable computing device 100 comprising a game system. In some examples, the processor 102 may be in communication with a single sensor 130 and, in other examples, the processor 102 may be in communication with a plurality of sensors 130, for example, a temperature sensor and a humidity sensor. In some examples, portable computing device 100 does not comprise sensor(s) 130.

Portable computing device 100 further includes haptic output device 118 in communication with the processor 102. The haptic output device 118 is configured to output a haptic effect in response to a haptic signal. In some examples, the haptic output device 118 is configured to output a haptic effect comprising, for example, a vibration, a change in a perceived coefficient of friction, a simulated texture, a change in temperature, a stroking sensation, an electro-tactile effect, or a surface deformation (e.g., a deformation of a surface associated with the portable computing device 100). Although a single haptic output device 118 is shown here, some examples may comprise multiple haptic output devices 118 of the same or different type that can be actuated in series or in concert to produce haptic effects.

In the example shown in Figure 1B, the haptic output device 118 is internal to portable computing device 100. In some examples, the haptic output device 118 may be configured to output a haptic effect comprising a vibration. In some such examples, the haptic output device 118 may comprise one or more of a piezoelectric actuator, an electric motor, an electro-magnetic actuator, a voice coil, a shape memory alloy, an electro-active polymer, a solenoid, an eccentric rotating mass (ERM) motor, or a linear resonant actuator (LRA). In some examples, an ERM motor can be a bar ERM motor or a coin ERM motor.

In various examples, a haptic output device, such as haptic output device 118, can be any component or collection of components that is capable of outputting one or more haptic effects. For example, a haptic output device can be one of various types including, but not limited to, an eccentric rotational mass (ERM) actuator, a linear resonant actuator (LRA), a piezoelectric actuator, a voice coil actuator, an electro-active polymer (EAP) actuator, a memory shape alloy, a pager, a DC motor, an AC motor, a moving magnet actuator, an E-core actuator, a smartgel, an electrostatic actuator, an electrotactile actuator, a deformable surface, an electrostatic friction (ESF) device, an ultrasonic friction (USF) device, or any other haptic output device or collection of components that perform the functions of a haptic output device or that are capable of outputting a haptic effect. Multiple haptic output devices or different-sized haptic output devices may be used to provide a range of vibrational frequencies, which may be actuated individually or simultaneously. Various examples may include a single or multiple haptic output devices and may have the same type or a combination of different types of haptic output devices.

In some examples, the haptic output device 118 may be configured to output a haptic effect modulating the perceived coefficient of friction on a surface of the portable computing device 100 in response to a haptic signal. In some such examples, the haptic output device 118 may comprise an ultrasonic actuator. The ultrasonic actuator may comprise a piezo-electric material. An ultrasonic actuator may vibrate at an ultrasonic frequency, for example 20 kHz, increasing or reducing the perceived coefficient at the surface of touch-sensitive surface 116.

The portable computing device 100 also includes a front-facing camera 134. For example, the front-facing camera 134 shown in Figure 1A points or faces towards a user of the portable computing device 100 when the portable computing device 100 is used by the user. The front-facing camera 134 is configured to communicate a video signal to processor 102. In some examples, the processor 102 is in communication with front-facing camera 134 via bus 106. In some examples, portable computing device 100 does not comprise a front-facing camera.

The portable computing device 100 also includes a rear-facing camera 140. For example, the rear-facing camera 140 in Figure 1B points or faces away from a user of the portable computing device 100 when the portable computing device 100 is used by the user. The rear-facing camera 140 is configured to communicate a video signal to processor 102. In some examples, the processor 102 is in communication with rear-facing camera 140 via bus 106. In some examples, portable computing device 100 does not comprise a rear-facing camera. In examples, portable computing device 100 does not comprise any camera.

The portable computing device 100 also includes internal microphone 142. In some examples, an audio signal in a raw pulse-code modulation (PCM) signal format can be captured using internal microphone 142. In examples, an audio signal having a sampling rate of at least 8,000 Hz can be captured using internal microphone 142. In examples, an audio signal having a sampling rate of at least 22,050 Hz can be captured using internal microphone 142. In examples, an audio signal having a sampling rate of at least 44,100 Hz can be captured using internal microphone 142. In some examples, an audio signal having a sampling rate between 1,000 Hz and 44,100 Hz can be captured using internal microphone 142. For example, software on the portable computing device may allow selection of a sampling rate in which to capture an audio signal from internal microphone 142. In various examples, any suitable sampling rate can be used; however, accuracy in estimating the portable computing device's 100 acceleration using internal microphone 142 generally increases with greater sampling rates.

In the example shown in Figure 1B, the portable computing device 100 has an internal accelerometer 144. In examples, a maximum sampling rate corresponding to the internal microphone 142 is greater than a maximum sampling rate corresponding to the internal accelerometer 144. For example, an audio driver on the portable computing device can be configured to control internal microphone 142 and may specify a maximum sampling rate of 44,100 Hz for the internal microphone 142. In this example, an accelerometer driver on the portable computing device can be configured to control internal accelerometer 144 and may specify a maximum sampling rate of 1,000 Hz for the internal accelerometer 144. In one example, the maximum sampling rate corresponding to the internal microphone 142 is least 22,050 Hz and a maximum sampling rate corresponding to the internal accelerometer 144 is less than 300 Hz. In some examples, a maximum sampling rate corresponding to the internal accelerometer 144 is 100 Hz or approximately 100 Hz. In other examples, a maximum sampling rate corresponding to the internal accelerometer 144 is 200 Hz or approximately 200 Hz. In other examples, the portable computing device 100 does not have any accelerometer.

The portable computing device 100 also includes memory 104. In examples, memory 104 comprises one or more program components that are configured to estimate acceleration of portable computing device 100 based on an audio signal captured by internal microphone 142 when internal haptic output device 118 outputs a haptic effect. For example, memory 104 comprises one or more program components that perform part or all of the method 200 in Figure 2 according to various examples.

Referring now to Figure 2, this figure illustrates an example method 200 of estimating acceleration of a portable computing device (such as portable computing device 100 shown in Figures 1A and 1B) when an internal haptic output device (such as haptic output device 118 shown in Figure 1B) in the portable computing device outputs a haptic effect by using an internal microphone (such as microphone 142 shown in Figure 1B) in the portable computing device. Reference will be made with respect to Figures 1A and/or 1B; however, any suitable portable computing device according to this disclosure may be employed to estimate an acceleration of the portable computing device when an internal haptic output device outputs a haptic effect by using an internal microphone of the portable computing device according to various examples.

The method 200 begins at block 210 when a haptic signal is generated. For example, a processor in a portable computing device can generate a haptic signal configured to cause an internal haptic output device in the portable computing device to output a haptic effect. In one example, processor 102 generates a haptic signal and the haptic signal is configured to cause haptic output device 118 to output a haptic effect. For example, the haptic signal can be configured to cause haptic output device 118 to vibrate. In some examples, the haptic effect comprises a haptic pattern. In some examples, the haptic signal is configured to cause haptic output device 118 to output a haptic effect at a maximum magnitude of the haptic output device 118.

At block 220, a haptic signal is output. For example, a processor in a portable computing device can output the haptic signal to an internal haptic output device the portable computing device which causes the internal haptic output device to output the haptic effect in response to receiving the haptic signal. In one example, processor 102 outputs the haptic signal generated in block 210 to haptic output device 118. In this example, haptic output device 118 outputs the haptic effect in response to receiving the haptic signal from processor 102.

At block 230, an audio signal from an internal microphone is captured. For example, a processor in a portable computing device can capture an audio signal from an internal microphone in the portable computing device while at least part of the haptic effect is being output. In one example, processor 102 captures an audio signal from internal microphone 142 while haptic output device 118 is outputting at least part of the haptic effect.

In some examples, the audio signal is a raw pulse-code modulation (PCM) signal. In an example, the audio signal has a sampling rate of at least 8,000 Hz. In another example, the audio signal has a sampling rate of at least 22,050 Hz. In some examples, the audio signal has a sampling rate of at least 44,100 Hz. In some examples, the audio signal has a sampling rate between at least 1,000 Hz and 44,100 Hz. In various examples, the audio signal can have any suitable sampling rate; however, accuracy in determining the computing device's 100 acceleration using internal microphone 142 generally increases as the sampling rate in the audio signal increases. In some examples, the audio signal has a sampling rate that is greater than a maximum sampling rate corresponding to internal accelerometer 144.

As discussed above with respect to Figures 1B, in some examples, a portable computing device does not have an internal accelerometer. In other examples, a portable computing device has an internal accelerometer. In some examples, the audio signal has a sampling rate greater than a maximum sampling rate corresponding to internal accelerometer 144. For example, a driver of the internal accelerometer 144 may specify a maximum sampling rate that is less than or equal to 100 Hz for the internal accelerometer 144 and the audio signal may have a sampling rate that is greater than 100 Hz. As another example, a driver of the internal accelerometer 144 may specify a maximum sampling rate that is less than or equal to 1,000 Hz for the internal accelerometer 144 and the audio signal may have a sampling rate that is greater than 1,000 Hz. In examples where the audio signal has a sampling rate that is greater than a maximum sampling rate corresponding to the internal accelerometer 144, the accuracy in estimating the portable computing device's 100 acceleration by using internal microphone 142 is greater than the accuracy in estimating the computing device's 100 acceleration by using internal accelerometer 144. Likewise, because an estimated acceleration of portable computing device 100 generally correlates with and indicates an estimated acceleration produced by the haptic output device 118 when outputting a haptic effect, the accuracy of estimating the haptic output device's 118 acceleration when outputting the haptic effect is greater when the sampling rate of the audio signal is greater than a maximum sampling rate corresponding to the internal accelerometer 144.

In some examples, a microphone hole in the portable computing device is blocked, such as with tape and/or a user's finger, prior to the haptic signal being generated in block 210 and/or prior to the haptic signal being output in block 220. In examples, blocking the microphone hole in the portable computing device provides a cleaner signal by reducing ambient noise that may be detected by the internal microphone in the portable computing device. Accordingly, an application developer (such as a programmer) may block a microphone hole in the portable computing device 100 to more accurately determine the device's acceleration using internal microphone 142 when haptic effects are output to configure the haptic effects for portable computing device 100. Thus, an application developer can, for example, determine accelerations for various models of various computing devices using the devices' internal microphone when haptic effects are output and can configure or otherwise tune the haptic effects such that the devices' acceleration is the same when the same haptic effect is output by these devices which can provide a consistent haptic experience across the various computing devices.

As discussed above with respect to Figure 1B, in some examples portable computing device 100 comprises an internal accelerometer 144. In these examples, the internal accelerometer 144 can measure acceleration while at least part of the haptic effect is being output. For example, processor 102 can capture measured acceleration from internal accelerometer 144 at the same time that processor 102 captures the audio signal from microphone 142.

At block 240, the audio signal captured in block 230 is filtered. For example, a processor in a portable computing device can filter the audio signal captured in block 230. In an example, processor 102 in portable computing device 100 filters the audio signal. For example, a low pass filter can be applied to the audio signal to remove high frequency noise. As another example, a band pass filter can be applied to the audio signal to remove high frequency and very low frequency noise. In one example, one or more band pass filters can be applied to the audio signal to remove any signal except a vibration frequency range corresponding to haptic output device 118.

At block 250, an acceleration of the portable computing device while internal haptic output device is outputting at least part of the haptic effect is estimated based at least in part on the audio signal. In some examples, an acceleration of the portable computing device is estimated using an unfiltered audio signal, such as the audio signal captured in block 230. In other examples, an acceleration of the portable computing device is estimated using a filtered audio signal, such as the filtered audio signal from block 240.

In an example, the unfiltered and/or filtered audio signal represents an estimated acceleration of portable computing device 100. In some examples, portable computing device 100 comprises an internal accelerometer 144. As discussed above with respect to block 230, in some examples the internal accelerometer 144 captures measured acceleration from internal accelerometer 144 at the same time that processor 102 captures the audio signal from microphone 142. In these examples, the measured acceleration from internal accelerometer 144 can be used to scale the audio signal, such as scaling the audio signal to real gravity value. This can be done, for example, by having haptic output device 118 output a haptic effect at full magnitude while simultaneously capturing acceleration from internal accelerometer 144 and the audio signal from internal microphone 142, and then scaling the audio signal based on the captured acceleration internal accelerometer 144.

As discussed above with respect to Figure 1B, in some examples portable computing device 100 has a display. In some examples, processor 102 outputs a display signal to the display in portable computing device 100. The display signal can be configured to cause the display to visually show information on the display. For example, the display signal can include the estimated acceleration of portable computing device 100 while internal haptic output device 118 is outputting at least part of the haptic effect. In some examples, the display signal comprises a graph of the estimated acceleration of portable computing device 100 while internal haptic output device 118 is outputting at least part of the haptic effect. For example, in examples, the display signal comprises a graph scaling the unfiltered audio signal and/or the filtered audio signal to real gravity value based on the measured acceleration from portable computing device's 100 internal accelerometer 144 while the internal haptic output device 118 is outputting at least part of the haptic effect.

In some examples, acceleration can be estimated (such as described herein with respect to blocks 210-250) without using a feedback loop. For example, a haptic signal can be generated and output, an audio signal from an internal microphone can be captured and filtered, and an acceleration estimated as described herein. In such examples, the device's internal microphone can be used to capture the audio signal from the device's internal microphone and the device's acceleration can be estimated without a feedback loop without adjusting the haptic effect. A developer may use the estimated acceleration when designing haptic effects for an application for the device. In other examples, a feedback loop can be used to adjust the haptic effect based on the estimated acceleration as shown in block 260 in Figure 2.

At block 260, the haptic effect is optionally adjusted based on the estimated acceleration. For example, a developer of an application for the portable computing device 100 can manually adjust a characteristic of the haptic effect based on the estimated acceleration. In some examples, a user of the portable computing device 100 can manually adjust a characteristic of the haptic effect based on the estimated acceleration. For example, in an example, one or more characteristics (such as rise time, stop time, decay time, maximum magnitude, pulsing frequency, etc.) can be estimated based on the estimated acceleration and/or can be adjusted based on the estimated acceleration.

In some examples, a characteristic of the haptic effect can automatically be adjusted by the portable computing device 100 based on the estimated acceleration. For example, processor 102 can automatically adjust one or more characteristics of the haptic effect based on the estimated acceleration. In some examples, after the haptic effect has been output by haptic output device 118, processor 102 adjusts one or more characteristics of the haptic effect based on the estimated acceleration. In these examples, the adjusted characteristic(s) of the haptic effect are used for subsequent output of the haptic effect by the haptic output device 118 in the portable computing device 100. In an example, the characteristic(s) of the haptic effect are adjusted to change the estimated acceleration of the portable computing device 100 to match (or in an effort to match) a predefined acceleration for the haptic effect, such as a predefined acceleration for the haptic effect specified by a developer of an application or a predefined acceleration for the haptic effect specified by a user of portable computing device 100.

In examples, a characteristic of the haptic effect can be adjusted in real-time by the portable computing device 100 based on the estimated acceleration. For example, processor 102 can adjust one or more characteristics of the haptic effect based on the estimated acceleration. In this example, while the haptic effect is being output by haptic output device 118, an acceleration of the portable computing device 100 is estimated in block 250 based at least in part on the audio signal. Before the haptic output device 118 finishes outputting the haptic effect, the processor 102 determines one or more characteristics of the haptic effect to adjust and sends a signal to the haptic output device 118 to adjust the characteristic(s) of the haptic effect. In an example, the processor 102 determines the one or more characteristics of the haptic effect to adjust based on comparing a predefined acceleration for the haptic effect with the estimated acceleration. In examples, characteristic(s) of the haptic effect are adjusted in real-time until the estimated acceleration matches or approximates the predefined acceleration for the haptic effect.

In some examples, the estimated acceleration is used to improve the rendering of haptic effects. For example, the estimated acceleration can be used to determine when to brake or stop a haptic signal. As another example, the estimated acceleration can be used to determine how much to ramp up a haptic effect and/or how much to ramp down a haptic effect. In an example, a brake is implemented by analyzing a phase of a vibration signal and applying a vibrating command configured to be 180 degrees out of phase with the vibration signal.

Referring now to Figures 3 through 9, these figures show normalized accelerations measured by an external accelerometer when various smartphones having an actuator outputs a particular haptic effect as compared to estimated normalized accelerations measured using the smartphones' internal microphone according to various examples.

The smartphones used in Figure 3 through Figure 9 were a Samsung Galaxy S6 smartphone, a Samsung Galaxy S7 smartphone, a Samsung Galaxy S6 Edge smartphone, a Samsung Grande smartphone, a HTC One M9 smartphone, a Xiaomi RedMi Note 3 smartphone, and a LG Nexus 5 smartphone, respectively.

Each smartphone used in Figures 3 through 9 ran an Android operating system. In particular, the smartphones used with respect to Figures 3 thru 5 and Figure 9 ran the Android 6 operating system. The smartphones used with respect to Figures 7 and 8 ran the Android 5 operating system. The smartphone used with respect to Figure 6 ran the Android 4 operating system.

Each smartphone used in Figures 3 through 9 also had an actuator. In particular, the smartphones used with respect to Figures 3 thru 5 had a respective linear resonant actuator (LRA). The smartphones used with respect to Figures 6 and 9 had a respective coin eccentric rotating mass (ERM) motor. The smartphones used with respect to Figures 7 and 8 had a respective bar eccentric rotating mass (ERM) motor.

Each smartphone used in Figure 3 through Figure 9 had a respective internal microphone that was used to estimate that smartphone's acceleration when that smartphone's internal actuator output a particular haptic effect. To do so, the raw pulse-code modulation (PCM) audio signal from the smartphones' internal microphone was captured at 44.1 KHz while the smartphone was vibrating. In order to reduce the captured noise, each smartphone's microphone was masked with tape prior to capturing its audio signal.

Using the Vibrate() method in Android's operating system, the following haptic pattern - {20,100,40,100,100,300,300} - was output by each smartphone's actuator. An accelerometer signal was captured using an external accelerometer when the smartphone's actuator output the haptic pattern. Then, the raw PCM audio signal from the smartphones' internal microphone was captured at 44.1 KHz when the smartphone's actuator output the haptic pattern and no external accelerometer was attached to the smartphone.

Next, the captured accelerometer signal and the captured microphone signal was filtered using a 100 to 300 Hz band pass filter; however, in other examples, any suitable band pass filter may be used. Then, as shown in Figures 3 through 9, the normalized acceleration captured by the external accelerometer was compared with the normalized estimated acceleration captured by the smartphone's internal microphone. For the smartphones having an LRA actuator, a one axis acceleration comparison graph was generated. For the smartphones having an ERM motor, a 3D acceleration comparison graph was generated. As shown in Figures 3 through 9, the estimated acceleration captured by the smartphones' internal microphones when the smartphone vibrated approximated the acceleration captured by the external accelerometer. For example, for the smartphones having an ERM motor, a vector acceleration was computed from the external accelerometer's 3-axis acceleration data, and this vector acceleration was compared to the one axis acceleration estimated from the audio signal. In this example, the vector acceleration was estimated using a vector equation acc_vector = sqrt(x*x+y*y+z*z), where x, an y, and z were the three perpendicular acceleration axes. Accordingly, a portable computing device's internal microphone can be used to approximate the portable computing device's acceleration when vibrating as described herein according to various examples.

While some examples of devices, systems, and methods herein are described in terms of software executing on various machines, the methods and systems may also be implemented as specifically-configured hardware, such as field-programmable gate array (FPGA) specifically to execute the various methods. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs for editing an image. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example computer-readable storage media, that may store instructions that, when executed by the processor, can cause the processor to perform the steps described herein as carried out, or assisted, by a processor. Examples of computer-readable media may include, but are not limited to, an electronic, optical, magnetic, or other storage device capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code for carrying out one or more of the methods (or parts of methods) described herein.

Examples of methods disclosed herein may be performed in the operation of computing devices. The order of the blocks presented in the examples above can be varied-for example, blocks can be re-ordered, combined, and/or broken into sub-blocks. Certain blocks or processes can be performed in parallel. Thus, while the steps of methods disclosed herein have been shown and described in a particular order, other examples may comprise the same, additional, or fewer steps. Some examples may perform the steps in a different order or in parallel. In some examples, one or more steps in a method described herein may be optional.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

## Claims

1. A portable computing device (100), comprising:
a haptic output device (118);
a microphone (142);
a memory (104); and
a processor (102) in communication with the haptic output device (118), the microphone (142), and the memory (104), the processor configured to receive executable instructions from the memory which, when executed by the processor, cause the processor to:
generate a haptic signal configured to cause the haptic output device (118) to output a haptic effect;
output the haptic signal to the haptic output device (118) to cause the haptic output device to output the haptic effect;
capture an audio signal using the microphone (142) while at least part of the haptic effect is output by the haptic output device (118); and
estimate an acceleration of the portable computing device (100) when the haptic effect is output based on the audio signal.

2. The portable computing device of claim 1, wherein the portable computing device (100) further comprises an accelerometer (144), and wherein a maximum sampling rate corresponding to the microphone (142) is greater than a maximum sampling rate corresponding to the accelerometer (144).

3. The portable computing device of claim 2, wherein an audio driver specifies the maximum sampling rate corresponding to the microphone (142), and wherein an accelerometer driver specifies the maximum sampling rate corresponding to the accelerometer (144).

4. The portable computing device of any preceding claim, wherein one or more of the following: the maximum sampling rate corresponding to the accelerometer (144) is less than 1,000 Hz, or the maximum sampling rate corresponding to the microphone (142) is at least 20,050 Hz.

5. The portable computing device of any preceding claim, wherein the processor is further configured to receive executable instructions from the memory which, when executed by the processor, cause the processor to carry out one or more of the following:
apply at least one filter to the audio signal to remove frequencies from the audio signal not corresponding to a vibration frequency of the haptic output device (118) prior to estimating the acceleration; or
apply at least one of a low pass filter or a band pass filter to the audio signal prior to estimating the acceleration.

6. The portable computing device of any preceding claim, wherein the processor is further configured to receive executable instructions from the memory which, when executed by the processor, cause the processor to:
adjust at least one characteristic of the haptic effect in real-time until the estimated acceleration corresponds with a predefined acceleration for the haptic effect.

7. The portable computing device of any preceding claim, wherein the portable computing device further comprises a display in communication with the processor, and wherein the processor is further configured to receive executable instructions from the memory which, when executed by the processor, cause the processor to:
output a display signal to the display, the display signal configured to cause the display to show the estimated acceleration on the display.

8. A method comprising:
receiving, by a processor (102) in a portable computing device (100), a sensor signal from a sensor (142, 144) in the portable computing device (100), the sensor signal indicating a movement of the portable computing device (100);
capturing (230), by the processor (102), an audio signal from a microphone (142) in the portable computing device (100) in response to receiving the sensor signal indicating the movement of the portable computing device (100); and
estimating (250), by the processor (102), an acceleration of the portable computing device (100) based on the audio signal.

9. The method of claim 8, further comprising:
applying (240), by the processor (102), at least one filter to the audio signal prior to estimating the acceleration.

10. The method of claim 8 or claim 9, further comprising:
generating (210), by the processor (102), a haptic signal configured to cause a haptic output device (118) in the portable computing device (100) to output a haptic effect;
outputting (220), by the processor (102), the haptic signal to the haptic output device (118) to cause the haptic output device to output the haptic effect, and
wherein the output of the haptic effect causes the sensor (142, 144) in the portable computing device (100) to send the sensor signal indicating the movement of the portable computing device (100) to the processor (102) in the portable computing device.

11. The method of claim 10, further comprising:
adjusting (260), by the processor (102), at least one characteristic of the haptic effect in real-time until the estimated acceleration corresponds with a predefined acceleration for the haptic effect.

12. The method of any of claims 8 to 11, further comprising:
outputting, by the processor (102), a display signal to a display in the portable computing device (100), the display signal configured to cause the display to show the estimated acceleration on the display.

13. The method of any of claims 8 to 12, wherein the audio signal is a raw pulse-code modulation (PCM) signal.

14. The method of any of claims 8 to 13, wherein the audio signal comprises a sampling rate greater than a maximum sampling rate corresponding to an accelerometer (144) in the portable computing device (100), the maximum sampling rate corresponding to the accelerometer (144) and specified by an accelerometer driver configured to control the accelerometer.

15. A non-transitory computer-readable medium comprising one or more software applications configured to be executed by a processor, the one or more software applications configured to carry out the method of any one of claims 8 to 14.
